# EUROPEAN PATENT SPECIFICATION

(11) **EP 3 030 838 B1**
(45) Date of publication and mention of the grant of the patent: **19.07.2017**
(21) Application number: 14747015.7
(22) Date of filing: 31.07.2014
(51) Int. Cl.: F23B 30/00, F23B 90/06, F23G 5/027, F23G 5/16, F23G 5/24, F23G 7/10, F23L 1/02, F23L 9/04

(54) **APPARATUS FOR GENERATING ENERGY BY GASIFICATION**
VORRICHTUNG ZUR ENERGIEERZEUGUNG DURCH GASIFIZIERUNG
APPAREIL DE GÉNÉRATION D'ÉNERGIE PAR GAZÉIFICATION

(30) Priority: 08.08.2013 IT MO20130235
(43) Date of publication of application: 15.06.2016
(73) Proprietor: Errani, Marco, 29017 Fiorenzuola D'arda (IT)
(72) Inventor: Errani, Marco, 29017 Fiorenzuola D'arda (IT)
(74) Representative: Modiano, Micaela Nadia
(86) International application number: PCT/EP2014/066544
(87) International publication number: WO 2015/018742

(56) References cited:
- WO-A1-03/012339
- DE-A1-102004 045 926
- US-A- 4 177 740
- US-A- 5 720 165
- US-A1- 2009 126 607

## Description

The present invention relates to an apparatus for generating energy by gasification.

For some time the thermochemical process of gasification has been known, which makes it possible to convert carbon-rich combustible material to a gaseous mixture that is mainly composed of carbon monoxide and hydrogen, and is generically referred to as synthesis gas or syngas.

Such process can be fed with a combustible that is solid or liquid, organic or inorganic.

The gasification process consists of a thermochemical decomposition of the combustible material which occurs at high temperatures, generally higher than 700-800 °C, and in the presence of a substoichiometric quantity of an oxidizer agent (air, steam or oxygen).

In more detail, during the thermochemical process many reactions of different types occur simultaneously, and are aimed at the conversion of the starting combustible material to lighter combustibles: after a partial controlled oxidation by the quantity of oxidizer introduced, which provides the heat necessary for the load to reach the reaction temperature, a synthesis fuel gas is produced that is constituted predominantly by carbon monoxide and hydrogen in various proportions and, to a lesser extent, by methane.

Air, steam or oxygen can be used as an oxidizer substance. If steam or oxygen is used as an oxidizer, then the syngas obtained will have a higher calorific value in that it does not contain nitrogen, which is inert to combustion.

In order to minimize the impact that such processes have on the environment, the combustible used can be obtained from renewable energy sources, i.e. forms of energy produced from energy sources that are derived from particular natural resources which owing to their intrinsic characteristics are regenerated at least at the same speed at which they are consumed, or are not "exhaustible" in "human" timescales, whose use does not compromise those same natural resources for future generations. Thus, they are alternative forms of energy to traditional fossil sources (which are non-renewable energy sources). In particular, biomass is a primary energy source of the renewable type. The term "biomass" means any organic substance that derives directly or indirectly from chlorophyll photosynthesis.

As well as the formation of syngas, the process of gasification of biomass forms secondary products which are constituted by a liquid phase or "tar", which at high temperatures remains in suspension in the syngas, and by a solid phase constituted by "biochar" (charcoal) or ash, which remains as a process residue and has to be removed from the reaction chamber.

The above mentioned liquid phase is substantially constituted by tar, i.e. aromatic hydrocarbons of the tarry type, and is potentially damaging to the apparatuses.

The gasification process is used primarily for the production of heat and can be used in the production of electricity, when the syngas produced is treated in a burner that uses the combustion gases to power a gas turbine or an external combustion engine or directly in an internal combustion engine.

In apparatuses used for gasification processes, there are several different types of gasifiers.

For example, fixed-bed gasifiers are known which operate against the current, called "updraft" gasifiers, which involve a hollow main body, which defines internally a reaction chamber, on the bottom wall of which is deposited a layer of combustible through which the flow of oxidizer is made to pass against the current, with respect to the flow of supply of the combustible.

In these gasifiers, the syngas obtained tends to flow upwardly and is drawn from the upper region; in this manner, before exiting it is filtered through the biomass being introduced, heating it and drying it, and thus favoring the partial combustion and pyrolysis thereof.

This is the principle underlying the construction of gasifiers of different size according to the application for which they are aimed at.

For domestic use, for example, the application is known of such updraft gasifiers which are conveniently dimensioned as portable stoves. In such version there is a jacket for containing the above mentioned main body and a fan accommodated within it, below the main body.

In the upper part of the containment jacket is the combustion region and the jacket proper acts as a support for saucepans or other items to be heated by way of the flame.

The above mentioned fan sends a flow of air both into the reaction chamber through adapted holes provided in the main body, as oxidizer for the partial combustion of the biomass, and also into the upper region, as oxidizer for the combustion of the syngas, so as to prevent the flame from being extinguished if the item placed on the stove does not allow air to be drawn from the outside. Such a gasifier is disclosed, for example, in US 4177740.

These applications are not devoid of drawbacks among which is the fact that it is not possible to independently control and adjust the amount of air sent into the reaction chamber and the amount of air that is intended to feed the combustion of the syngas.

Furthermore such applications cannot be replicated in apparatuses of great size and they can be used only to develop heat energy by way of the combustion of the syngas in the form of a naked flame.

Last but not least, such gasifier versions feature intermittent operation, in that periodically the user has to empty the reaction chamber of solid residue deposited within it in order to be able to introduce new combustible fuel. Such manual removal of the solid residue is possible because of the reduced size of such apparatuses, but it cannot be replicated on apparatuses of greater size.

In the cogeneration sector, apparatuses are known that comprise an updraft gasifier, downstream of which is a syngas combustion chamber that powers an external combustion engine (a Stirling engine) with the combustion gases.

Such application, however, necessitates the use of wet biomass, with a percentage humidity content of at least 60%, in order to limit the formation of deposits of tar along the component parts owing to the cooling that the syngas undergoes in the transfer from the gasifier to the combustion chamber.

Alternatively, fixed-bed gasifiers are known which operate with the current, called "downdraft" gasifiers, which are similar to the previous gasifiers except that the flow of oxidizer is introduced in the same direction as the supply of combustible (i.e. downwardly), and the syngas is drawn from the lower region as well. In such apparatuses the tar that is formed by the reaction is burned while passing through the hot charcoal bed and thus a cleaner syngas is obtained than that obtained with counter-current gasifiers.

Precisely because of this characteristic, such downdraft gasifiers are used in apparatuses for producing electricity, as well as heat, for civil and industrial applications.

Such cogeneration apparatuses generally have a downdraft gasifier for the production of syngas, which is subsequently cooled and conveyed to a multistage treatment section for the separation of the residual tar. The treated synthesis gas is then used in an internal combustion engine or in a turbine coupled to an alternator for the production of electricity.

The treatment of the syngas in order to eliminate, or at least reduce, the tar present is necessary as such substance is deposited on the components, impairing them and reducing their yield.

However, the need to provide such systems for purifying the syngas leads to major energy losses, as well as negatively influencing the costs of implementation and the amount of space necessary for the installation of such apparatuses, thus limiting their spread.

Furthermore, in general, downdraft gasifiers have higher energy consumption than updraft gasifiers, in which the syngas tends to flow upwardly spontaneously.

Last but not least, the use of downdraft gasifiers restricts the choice of types of biomass that can be used, which must have a percentage humidity lower than 15% and be of optimal size.

It should be noted that continuous operation apparatuses have systems for removing the fixed residue from the reaction chamber, which generally employ screw feeders. Such systems, however, do not allow an effective removal of the residues in the event of formation of buildups.

The aim of the present invention is to eliminate the above mentioned drawbacks of the background art by providing an apparatus for generating energy by gasification which makes it possible to implement a continuous process that is conveniently adjustable in order to obtain an adequate level of control both of the gasification of the combustible, and of the combustion of the syngas obtained, without necessitating the use of combustibles that have particular chemical/physical characteristics.

Within this aim, an object of the present invention is to be able to use types of biomass with any percentage level of residual humidity as combustible fuel.

Another object of the present invention is to enable the use of an updraft gasifier, not only for the production of heat energy, but also for cogeneration, without necessitating intermediate treatments of the syngas produced and without the risks of malfunctions and inefficiencies deriving from the formation of deposits of solidified tar on the component parts.

Another object of the present invention is to have a structure that is compact and with relatively contained encumbrances, thus increasing the possibility of its use, both for private use and also for civil or industrial use.

Last but not least, another object of the present invention is to provide a simple structure, that is easy and practical to implement, safe in use and effective in operation, and low cost.

This aim and these objects are achieved by the present apparatus for generating energy by gasification, comprising an updraft gasifier provided with a main body that is internally hollow so as to define a reaction chamber into which are fed a flow of combustible material, which falls downwardly, and a flow of a first oxidizer medium, which flows upwardly against the current, in order to generate synthesis gas that flows out from at least one outlet that is arranged upward, and with a substantially boxlike supporting body that is arranged outside said main body, and with means for the combustion of the synthesis gas mixed with a flow of a second oxidizer medium, which are associated via connection with said at least one outlet, wherein said gasifier comprises separation means interposed between said supporting body and said main body so as to define a first chamber for introducing the first oxidizer medium, connected to said reaction chamber, and a second chamber for introducing the second oxidizer medium, proximate to said at least one outlet, the first and second chambers being mutually isolated and respective first and second adjustable means for supplying the first and second oxidizer medium being provided.

Further characteristics and advantages of the present invention will become better apparent from the detailed description of two preferred, but not exclusive, embodiments of an apparatus for generating energy by gasification, which is illustrated for the purposes of non-limiting example in the accompanying drawings wherein:

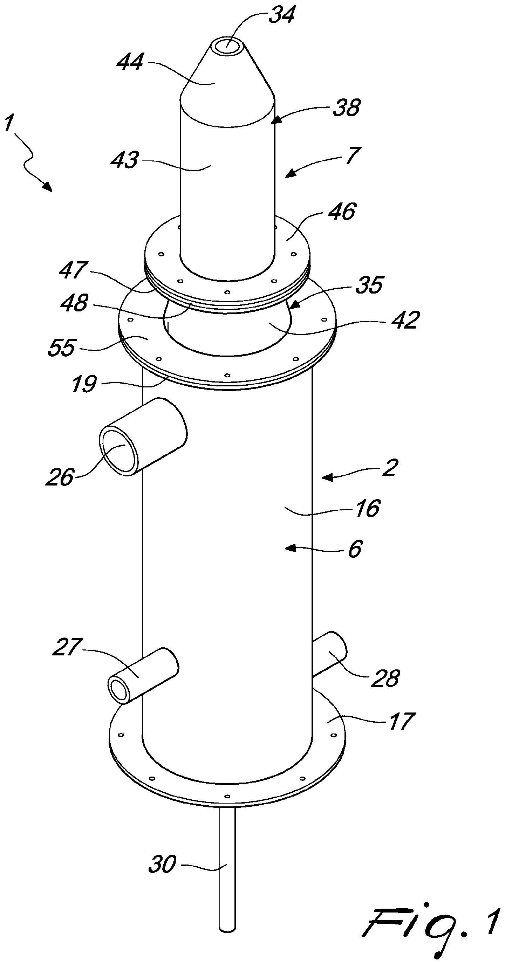

Figure 1 is an axonometric schematic view of a first embodiment of an apparatus for generating energy by gasification, according to the invention;

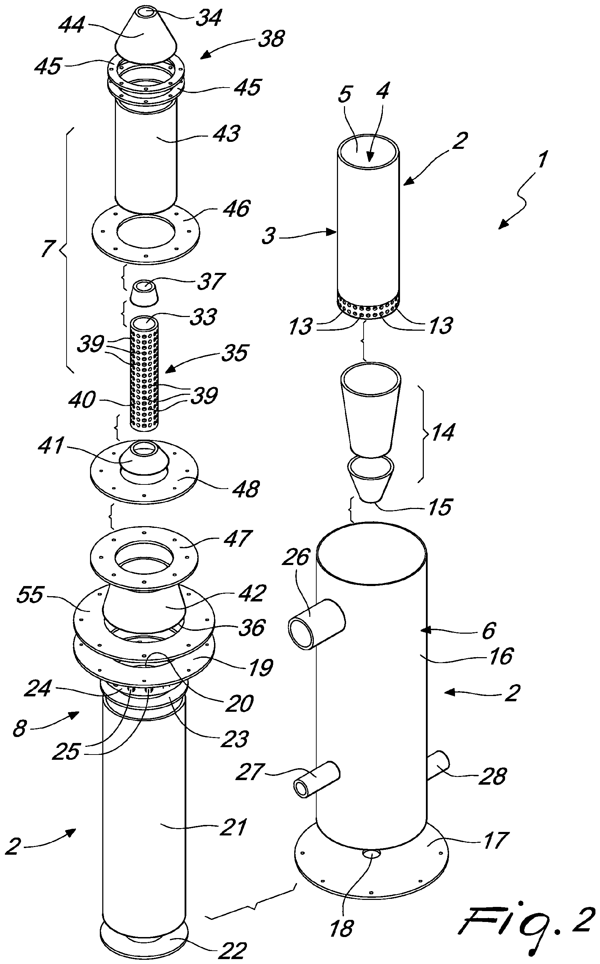

Figure 2 is an exploded schematic view of Figure 1;

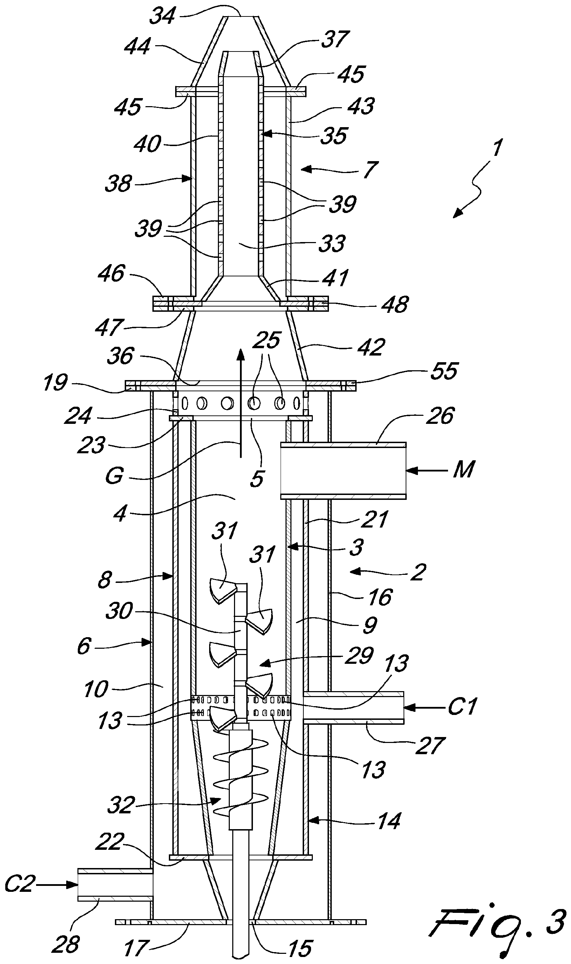

Figure 3 is a schematic transverse cross-sectional view of Figure 1;
Figure 4 is a schematic cross-sectional view of a second embodiment of an apparatus according to the invention.

With reference to the figures, the reference numeral 1 generally designates an apparatus for generating energy by gasification.

The apparatus 1 comprises an updraft gasifier 2 provided with a main body 3 that is internally hollow so as to define a reaction chamber 4 into which are fed a flow of combustible material M, which falls downwardly, and a flow of a first oxidizer medium C1, which flows upwardly against the current, in order to generate synthesis gas G and is provided, upward, with at least one outlet 5 of the synthesis gas G produced. The gasifier 2 comprises, furthermore, a substantially boxlike supporting body 6 that is arranged outside the main body 3 so as to define an interspace between the two.

The combustible material M to be used in the apparatus 1 can be organic or inorganic, solid or liquid. Preferably solid biomass can be used.

The first oxidizer medium C1, however, can be constituted by air, steam, oxygen or mixtures thereof.

The reaction chamber 4 extends about a substantially vertical axis as occurs in the conventional updraft gasifiers.

The apparatus 1 comprises means 7 for the combustion of the synthesis gas obtained in the reaction chamber 4 conveniently mixed with a second oxidizer medium C2, which are associated via connection with the outlet 5. The second oxidizer medium C2 is typically constituted by air.

The combustion means 7 make it possible to obtain heat energy which is yielded directly to the environment or can be recovered by way of heat exchange systems that are known to the person skilled in the art.

According to the invention the gasifier 2 comprises separation means 8 interposed between the supporting body 6 and the main body 3 so as to define, in the aforementioned interspace, two distinct chambers, a first chamber 9 for introducing the first oxidizer medium C1, connected to the reaction chamber 4, and a second chamber 10 for introducing the second oxidizer medium C2, proximate to the outlet 5 of the synthesis gas G.

The input chambers 9 and 10 are mutually isolated and first and second adjustable means, respectively 11 and 12, for supplying the first and second oxidizer medium C1 and C2 are provided, and are independently adjustable so as to be able to control the pressure/flow-rate of the flows of oxidizer medium that are aimed at the gasification reaction and at the combustion of the synthesis gas.

In more detail, the main body 3 is constituted by a cylindrical shell which is extended along a vertical axis, and has the upper end open so as to define the outlet 5 and the lower end closed on which the combustible material M is deposited.

In the lower part of the cylindrical shell 3 a plurality of through holes 13 is provided which are distributed perimetrically at the lower part of the reaction chamber 4.

Below the main body 3 there is a duct 14 for discharging the solid residue of reaction deposited on the bottom of the reaction chamber 4, which is constituted by two frustum-shaped portions that are arranged in series and converge downwardly and define an outlet 15 in a downward region.

The supporting body 6 is constituted by a cylindrical jacket 16 with a diameter and longitudinal extension that are greater than the main body 3 and with the lower one of the mutually opposite ends associated with a disk 17 that has an opening 18 that fits together with the outlet 15 and with the upper one of the mutually opposite ends associated with a first annular flange 19 that has a first hole 20 that fits together with the cross-section of the separation means 8.

The separation means 8 comprise a tubular element 21 with a diameter and longitudinal extension that are greater than the main body 3 and smaller than the jacket 16, which is associated at the lower end with a first annular element 22 that is provided with a hole for the passage of the discharge duct 14 and at the upper end with a second annular element 23 that is provided with an internal hole that fits together with the cross-section of the main body 3. The upper margin of the tubular element 21 is arranged at a substantially equal height to that of the outlet 5 that is defined by the main body 3.

The separation means 8 have, furthermore, above the second annular element 23, a cylindrical partition 24 provided with a plurality of through holes 25 distributed in an annular fashion for the outflow of the second oxidizer medium C2 from the second input chamber 10 at the outlet 5.

In essence, the first input chamber 9 is defined between the main body 3, the tubular element 21 and the annular elements 22 and 23, and is connected with the reaction chamber 4 only through the holes 13, while the second input chamber 10 is defined between the jacket 16, the tubular element 21 and the cylindrical partition 24, the disk 17 and the first flange 19, and connected only with the region immediately downstream of the reaction chamber 4 at the outlet 5 through the holes 25.

The gasifier 2 comprises, furthermore, a first sleeve 26 for supplying the combustible material M to the reaction chamber 4, which is inserted, with airtight seals, so as to pass through the main body 3, the tubular element 21 and the jacket 16, and into the upper part of the chamber; a second sleeve 27 for supplying the first oxidizer medium C1 to the first input chamber 9, which is inserted, with airtight seals, so as to pass through the tubular element 21 and the jacket 16, and into the lower part of the chamber, and a third sleeve 28 for supplying the second oxidizer medium C2 to the second input chamber 10, which is inserted, with airtight seals, so as to pass through the jacket 16 and into the lower part of the chamber.

Preferably the second sleeve 27 is positioned at or below the holes 13.

The combustible material M can be supplied through the first sleeve 26 by way of a loading system C of conventional type, not shown.

It should be noted that the elements that make up the various components of the gasifier 2 can be made of sheet metal and be mutually connected by way of welding or the like.

Advantageously, means 29 are provided for the removal of the solid residues from the bottom of the reaction chamber 4 through the discharge duct 14, for example, into a collection tank S buried on the site where the apparatus 1 is installed.

The removal means 29 comprise a rotating shaft 30 with vertical arrangement and which partially protrudes inside the reaction chamber 4 at the bottom thereof. The rotating shaft 30 has a plurality of elements for breaking up 31, of the type of vanes or the like, which protrude radially in order to allow the breakage of any build-ups of solid residue on the bottom of the reaction chamber 4 and facilitate their removal.

The removal means 29 comprise, furthermore, a screw feeder 32 for removing such solid residues from the reaction chamber 4, which is preferably coaxial with the rotating shaft 30 and is accommodated along the discharge duct 14.

The combustion means 7 comprise a combustion chamber 33 that is connected directly to the reaction chamber 4 through the outlet 5 for the direct passage of the synthesis gas G from one to the other and is provided with at least one outlet 34 for the evacuation of the combustion gases.

Advantageously, since the combustion chamber 33 is arranged immediately downstream of the reaction chamber 4, the synthesis gas G is kept at high temperatures and does not give rise to the formation of tarry deposits, since they can be burned directly without purification treatments.

In more detail the combustion means 7 comprise a first tubular body 35 which defines the combustion chamber 33 inside it. The first tubular body 35 is extended vertically and is provided with a first, lower end 36 for the inflow of the synthesis gas G mixed with the second oxidizer medium C2, which is associated with the outlet 5, and a second end 37, arranged opposite the first and arranged in an upper region, which is directed toward the evacuation outlet 34.

The combustion means 7 comprise, furthermore, a second tubular body 38 that contains the first tubular body 35, and which defines the evacuation outlet 34 in an upper region.

The first tubular body 35 is constituted by three sections of which a first section 40 is arranged in an upper region and is substantially cylindrical, a second section 41 is intermediate and a third section 42 is lower. The second and third sections, respectively 41 and 42, are frustum-shaped and diverge downwardly, and the lower margin of the third section 42 coincides substantially with the annular partition 24.

Advantageously the lateral shell of the first section 40 is provided with a plurality of through slots 39, and the second tubular body 38 has a greater diameter, thus defining an expansion chamber for the combustion gases externally to the first section 40.

The second tubular body 38 is constituted by a cylindrical portion 43 that is connected in an upper region to a frustum-shaped portion 44 that converges upwardly so as to define the evacuation outlet 34 by way of a pair of connection flanges 45, each of which is welded to a respective portion and both are associated with each other by way of threaded elements, not shown.

Connected to the base of the second tubular element 38 is a second annular flange 46, for connection to the first tubular element 35 by way of a third annular flange 47 and an intermediate ring 48 which are interposed between the second and the third section 41 and 42.

At the base of the first tubular element 35 there is a fourth annular flange 55 for connection to the first flange 19.

In the embodiment described above, the apparatus 1 is constituted by a compact assembly that makes it possible to obtain heat energy from the gasification of combustible material and subsequent combustion of the synthesis gas obtained.

With respect to traditional apparatuses, the invention enables an optimal management of the flows of the first and second oxidizer medium, which are adjustable independently of each other.

Furthermore, the particular configuration that involves positioning the combustion chamber 33 immediately downstream of the reaction chamber 4 prevents the cooling of the synthesis gas and makes it possible to burn it directly without executing intermediate treatments.

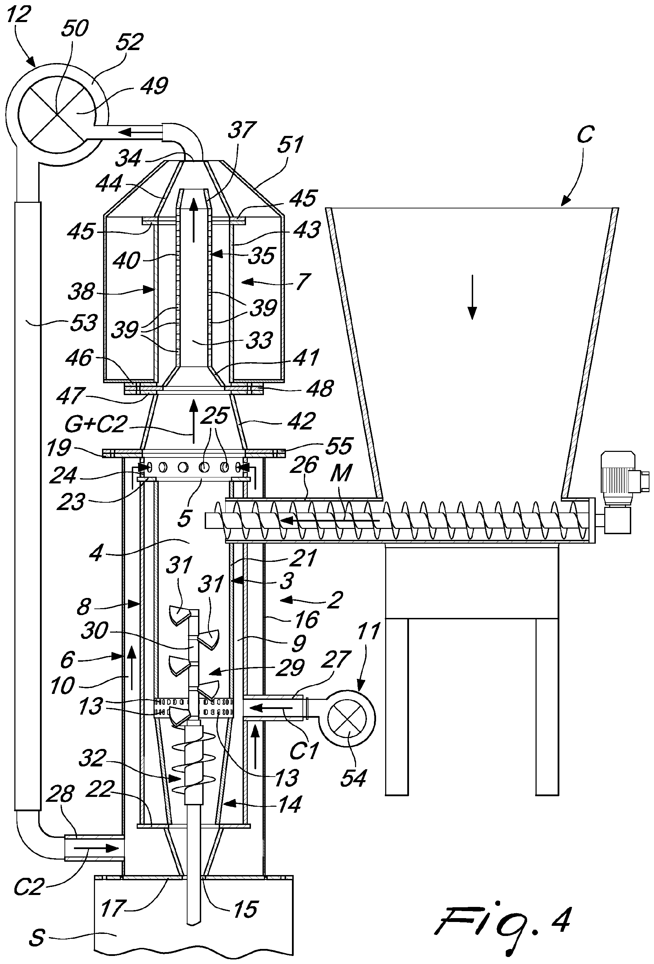

Advantageously the apparatus described above can be complemented, as illustrated in Figure 4, resulting in a cogeneration system as follows.

In the second embodiment (Figure 4), in fact, the apparatus 1, in addition to the assembly described above, has a fluid medium-powered engine 49, of the type of a turbine or the like, that is associated via connection with the evacuation outlet 34 for the treatment of the combustion gases and for the rotary actuation of a driving shaft 50.

Furthermore, means for generating electric power can be provided, which cooperate with the turbine 49, not shown. Such means of production, for example, can involve a conventional alternator device, directly coupled to the driving shaft 50 for the at least partial conversion of the mechanical energy of the driving shaft to electricity, or connected to an additional turbine that is actuated by the exhaust gases in output from the turbine 49.

The exhaust fumes of the turbine 49 can be diverted to a heat exchanger before being expelled from the smokestack, thus recovering a further amount of useful heat.

In Figure 4 the combustion means 7 comprise an additional protective shell 51 that is arranged externally to the second tubular body 38.

Advantageously, the second supply means 12 can comprise a rotary operating machine 52 driven by the driving shaft 50 for the at least partial conversion of the mechanical energy of such shaft into potential pressure energy of the second oxidizer medium C2. In particular the operating machine 52 can be constituted by a compressor with the intake connected to the environment and the outflow associated with the third sleeve 28 by way of a duct 53 for sending compressed air into the second input chamber 10, to act as the second oxidizer medium C2.

In the ascent along the second input chamber 10 toward the region of combustion, the compressed air is preheated by flowing over the outside of the tubular element 21, which in turn is heated by the heat released in the reaction chamber 4.

The first supply means 11 are a separate operating machine 54, of the type of a compressor, fan or the like, with the delivery directly connected to the second sleeve 27 in order to deliver compressed air at the base of the first input chamber 9, to act as the first oxidizer medium C1.

The rotation of the driving shaft 50 can be assisted by an external compressor, not shown, which is associated with the intake of the compressor 52.

Operation of the present invention is the following.

In the reaction chamber 4 a conventional gasification reaction takes place, which gives rise to the formation of synthesis gas G, which is burned directly in the upper combustion chamber 7.

The first oxidizer medium C1 necessary to sustain the gasification reaction is supplied to the reaction chamber 4 through the first input chamber 9.

The second oxidizer medium C2 necessary to sustain the combustion of the synthesis gas G is supplied and preheated through the second reaction chamber 10.

In the cogeneration version, the apparatus 1 exploits the potential energy of the combustion gases in order to generate mechanical/electrical energy, as well as to feed air under pressure into the second input chamber 10.

In practice it has been found that the invention as described achieves the intended aim and objects and, in particular, attention is drawn to the fact that the apparatus according to the invention makes it possible to effectively manage the process of gasification and combustion and prevents the problems deriving from the deposit of tarry residues.

Furthermore, the apparatus according to the invention is versatile in use and lends itself to being used for cogeneration as well.

Last but not least, if organic biomass is used as combustible material, then the environmental impact of the apparatus according to the invention is substantially null, in that the exhaust gases do not contain pollutant substances and the solid residues removed from the reaction chamber can be reused for example as soil improver.

The invention, thus conceived, is susceptible of numerous modifications and variations, all of which are within the scope of the appended claims.

Moreover, all the details may be substituted by other, technically equivalent elements. In practice the materials employed, as well as the contingent dimensions and shapes, may be any according to requirements without for this reason departing from the scope of protection claimed herein.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for generating energy by gasification, comprising an updraft gasifier (2) provided with a main body (3) that is internally hollow so as to define a reaction chamber (4) into which are fed a flow of combustible material (M), which falls downwardly, and a flow of a first oxidizer medium (C1), which flows upwardly against the current, in order to generate synthesis gas (G) that flows out from at least one outlet (5) that is arranged upward, and with a substantially boxlike supporting body (6) that is arranged outside said main body (3), and with means (7) for the combustion of the synthesis gas (G) mixed with a flow of a second oxidizer medium (C2), which are associated via connection with said at least one outlet (5), wherein said gasifier (2) comprises separation means (8) interposed between said supporting body (6) and said main body (3) so as to define a first chamber (9) for introducing the first oxidizer medium (C1), connected to said reaction chamber (4), and a second chamber (10) for introducing the second oxidizer medium (C2), proximate to said at least one outlet (5), the first and second chambers (9, 10) being mutually isolated and respective first and second adjustable means (11, 12) for supplying the first and second oxidizer medium (C1, C2) being provided.

2. The apparatus (1) according to claim 1, wherein said main body (3) is provided with a plurality of through holes (13) at the bottom of said reaction chamber (4) for the passage of said first oxidizer medium (C1) from said first input chamber (9) to said reaction chamber.

3. The apparatus (1) according to claim 1 and/or 2, wherein said separation means comprise an annular partition (24) provided with a plurality of through holes (25) for the passage of the second oxidizer medium (C2) from said second input chamber (10) at said outlet (5).

4. The apparatus (1) according to claim 1, wherein said combustion means (7) comprise a combustion chamber (33) that is connected directly to said reaction chamber (4) through said at least one outlet (5) for the direct passage of the synthesis gas (G) from one to the other and at least one outlet (34) for evacuation of the combustion gases.

5. The apparatus (1) according to claim 4, wherein said combustion means (7) comprise a first tubular body (35), which defines internally said combustion chamber (33) and is provided with a first end (36), for the inflow of the synthesis gas (G) and of the second oxidizer medium (C2), which is associated with said outlet (5), and with a second end (37), which is arranged opposite the first one and faces said at least one evacuation outlet (34), and a second tubular body (38) for the containment of said first tubular body (35) defining said at least one evacuation outlet (34), the first tubular body (35) being provided with a plurality of slots (39) and the second tubular body (38) having a larger diameter than the first one.

6. The apparatus (1) according to one or more of the preceding claims, which further comprises a fluid medium-powered engine (49) that is associated via connection with said at least one evacuation outlet (34) for the treatment of the combustion gases and for the rotary actuation of a driving shaft (50).

7. The apparatus (1) according to claim 6, which further comprises means for generating electric power which are associated with said engine (49).

8. The apparatus (1) according to claim 6 or 7, wherein said engine (49) is a turbine.

9. The apparatus (1) according to one or more of the preceding claims, wherein said second supply means (12) comprise a rotary operating machine (52) driven by said driving shaft (50) for the at least partial conversion of the mechanical energy of said shaft into potential pressure energy of the second oxidizer medium (C2).

10. The apparatus (1) according to claim 9 wherein said operating machine (52) is a compressor.

11. The apparatus (1) according to one or more of the preceding claims, wherein said first supply means (11) comprise a separate operating machine (54) in which the delivery is connected to said first input chamber (9).

12. The apparatus (1) according to one or more of the preceding claims, which further comprises means (29) for removing solid residues from the bottom of said reaction chamber (4).

13. The apparatus (1) according to claim 12, wherein said removal means (29) comprise a rotating shaft (30) that protrudes partially into said reaction chamber (4) and supports elements (31) for breaking up the solid residues deposited on the bottom of said reaction chamber (4) and a screw feeder (32) for moving said residues away from said reaction chamber (4).

## Patentansprüche

1. Eine Vorrichtung (1) zur Energieerzeugung durch Gasifizierung, die einen Steigstromvergaser (2) umfasst, ausgestattet mit einem Hauptkörper (3), der innen hohl ist, um eine Reaktionskammer (4) zu bestimmen, in welche ein Fluss von brennbarem Material (M) eingeführt wird, der nach unten fällt, und ein Fluss eines ersten Oxidationsmittels (C1), das gegen den Strom nach oben strömt, um Synthesegas (G) zu erzeugen, das aus mindestens einem Auslass (5) strömt, der oben angeordnet ist; und mit einem im Wesentlichen kastenähnlichen tragenden Körper (6), der außerhalb des Hauptkörpers (3) angebracht ist, und mit Mitteln (7) zur Verbrennung des Synthesegases (G), gemischt mit einem Fluss eines zweiten Oxidationsmittels (C2), die durch Verbindung mit dem mindestens einen Auslass (5) gekoppelt sind, wobei der Vergaser (2) Trennungsmittel (8) umfasst, die zwischen dem tragenden Körper (6) und dem Hauptkörper (3) angeordnet sind, um eine erste Kammer (9) zum Einführen des ersten Oxidationsmittels (C1) zu bestimmen, verbunden mit der Reaktionskammer (4), und eine zweite Kammer (10) zum Einführen des zweiten Oxidationsmittels (C2) nahe dem mindestens einen Auslass (5), wobei die erste und die zweite Kammer (9, 10) voneinander isoliert sind und entsprechende erste und zweite verstellbare Mittel (11, 12) zum Zuführen des ersten und des zweiten Oxidationsmittels (C1, C2) bereitgestellt sind.

2. Die Vorrichtung (1) gemäß Anspruch 1, wobei der Hauptkörper (3) am Boden der Reaktionskammer (4) mit einer Vielzahl von Durchgangsbohrungen (13) für den Durchfluss des ersten Oxidationsmittels (C1) von der ersten Zuführkammer (9) zu der Reaktionskammer versehen ist.

3. Die Vorrichtung (1) gemäß Anspruch 1 und/oder 2, wobei die Trennungsmittel eine ringförmige Trennwand (24) umfassen, die mit einer Vielzahl von Durchgangsbohrungen (25) für den Durchfluss des zweiten oxidationsmittels (C2) von der zweiten Zuführkammer (10) an dem Auslass (5) versehen ist.

4. Die Vorrichtung (1) gemäß Anspruch 1, wobei die Verbrennungsmittel (7) eine Brennkammer (33) umfassen, die durch den mindestens einen Auslass (5) direkt mit der Reaktionskammer (4) verbunden ist, zum direkten Übergang des Synthesegases (G) von der einen zur anderen, und mindestens einen Auslass (34) zum Ablassen der Verbrennungsgase.

5. Die Vorrichtung (1) gemäß Anspruch 4, wobei die Verbrennungsmittel (7) einen ersten rohrförmigen Körper (35) umfassen, der in seinem Inneren die Verbrennungskammer (33) bestimmt und mit einem ersten Ende (36) für das Einströmen des Synthesegases (G) und des zweiten Oxidationsmittels (C2) ausgestattet ist, das mit dem Auslass (5) verbunden ist, und mit einem zweiten Ende (37), das gegenüber dem ersten angeordnet und dem mindestens einen Auslass (34) zugewandt ist, und einen zweiten rohrförmigen Körper (38) zur Aufnahme des ersten rohrförmigen Körpers (35), der den mindestens einen Auslass (34) bestimmt, wobei der erste rohrförmige Körper (35) mit einer Vielzahl von Schlitzen (39) versehen ist und der zweite rohrförmige Körper (38) einen größeren Durchmesser hat als der erste.

6. Die Vorrichtung (1) gemäß einem oder mehreren der obigen Ansprüche, die weiter einen Strömungsmotor (49) umfasst, welche durch Verbindung mit dem mindestens einen Auslass (34) gekoppelt ist, zur Behandlung der Verbrennungsgase und für den Drehantrieb einer Antriebswelle (50).

7. Die Vorrichtung (1) gemäß Anspruch 6, die weiter Mittel zur Erzeugung von elektrischem Strom umfasst, die mit dem Motor (49) verbunden sind,

8. Die Vorrichtung (1) gemäß Anspruch 6 oder 7, wobei der Motor (49) eine Turbine ist.

9. Die Vorrichtung (1) gemäß einem oder mehreren der obigen Ansprüche, wobei die zweiten Zuführmittel (12) eine Rotationsmaschine (52) umfassen, angetrieben von der Antriebswelle (50), zur zumindest partiellen Umwandlung der mechanischen Energie der Welle in potentielle Druckenergie des zweiten Oxidationsmittels (C2).

10. Die Vorrichtung (1) gemäß Anspruch 9, wobei die Rotationsmaschine (52) ein Kompressor ist.

11. Die Vorrichtung (1) gemäß einem oder mehreren der obigen Ansprüche, wobei die ersten Zuführmittel (11) eine separate Arbeitsmaschine (54) umfassen, bei der der Ausgang mit der ersten Zuführkammer (9) verbunden ist.

12. Die Vorrichtung (1) gemäß einem oder mehreren der obigen Ansprüche, die weiter Mittel (29) zum Entfernen fester Rückstände vom Boden der Reaktionskammer (4) umfasst.

13. Die Vorrichtung (1) gemäß Anspruch 12, wobei die Entfernungsmittel (29) eine sich drehende Welle (30) umfassen, die teilweise in die Reaktionskammer (4) hineinragt und Elemente (31) trägt, um die festen Rückstände, die sich auf dem Boden der Reaktionskammer (4) abgelagert haben, aufzubrechen, und einen Schneckenabzieher (32), um die Rückstände von der Reaktionskammer (4) fortzubewegen.

## Revendications

1. Appareil (1) pour générer de l'énergie par gazéification, comprenant un gazéificateur à courant ascendant (2) muni d'un corps principal (3) qui est intérieurement creux, de façon à définir une chambre de réaction (4) dans laquelle sont délivrés un écoulement de matériau combustible (M), qui tombe vers le bas, et un écoulement d'un premier milieu oxydant (C1), qui s'écoule vers le haut à l'encontre du courant, de façon à générer un gaz de synthèse (G) qui s'écoule hors d'au moins un orifice de sortie (5) qui est disposé vers le haut, et d'un corps de support sensiblement en forme de boîte (6) qui est disposé à l'extérieur dudit corps principal (3), et de moyens (7) pour la combustion du gaz de synthèse (G) mélangé à un écoulement d'un deuxième milieu oxydant (C2), qui sont associés par l'intermédiaire d'une liaison audit orifice de sortie au nombre d'au moins un (5), dans lequel ledit gazéificateur (2) comprend des moyens de séparation (8) interposés entre ledit corps de support (6) et ledit corps principal (3) de façon à définir une première chambre (9) pour introduire le premier milieu oxydant (C1), reliés à ladite chambre de réaction (4), et une deuxième chambre (10) pour introduire le deuxième milieu oxydant (C2), à proximité dudit orifice de sortie au nombre d'au moins un (5), les première et deuxième chambres (9, 10) étant mutuellement isolées et des premiers et deuxièmes moyens ajustables respectifs (11, 12) pour délivrer les premier et deuxième milieux oxydants (C1, C2) étant disposés.

2. Appareil (1) selon la revendication 1, dans lequel ledit corps principal (3) est muni d'une pluralité de trous traversants (13) en bas de ladite chambre de réaction (4) pour le passage dudit premier milieu oxydant (C1) de ladite première chambre d'entrée (9) à ladite chambre de réaction.

3. Appareil (1) selon la revendication 1 et/ou 2, dans lequel lesdits moyens de séparation comprennent une séparation annulaire (24) munie d'une pluralité de trous traversants (25) pour le passage du deuxième milieu oxydant (C2) à partir de ladite deuxième chambre d'entrée (10) au niveau de ladite sortie (5).

4. Appareil (1) selon la revendication 1, dans lequel lesdits moyens de combustion (7) comprennent une chambre de combustion (33) qui est reliée directement à ladite chambre de réaction (4) par l'intermédiaire dudit orifice de sortie au nombre d'au moins un (5) pour le passage direct du gaz de synthèse (G) de l'une à l'autre et au moins un orifice de sortie (34) pour l'évacuation des gaz de combustion.

5. Appareil (1) selon la revendication 4, dans lequel lesdits moyens de combustion (7) comprennent un premier corps tubulaire (35), qui définit intérieurement ladite chambre de combustion (33) et qui est muni d'une première extrémité (36), pour l'écoulement d'entrée du gaz de synthèse (G) et du deuxième milieu oxydant (C2), qui est associée audit orifice de sortie (5), et d'une deuxième extrémité (37), qui est disposée à l'opposé de la première et qui fait face audit orifice de sortie d'évacuation au nombre d'au moins un (34), et un deuxième corps tubulaire (38) pour le confinement dudit premier corps tubulaire (35) définissant ledit orifice de sortie d'évacuation au nombre d'au moins un (34), le premier corps tubulaire (35) étant muni d'une pluralité de fentes (39) et le deuxième corps tubulaire (38) ayant un diamètre supérieur à celui du premier.

6. Appareil (1) selon l'une ou plusieurs des revendications précédentes, qui comprend de plus un moteur actionné par un milieu fluide (49) qui est associé par l'intermédiaire d'une liaison audit orifice de sortie d'évacuation au nombre d'au moins un (34) pour le traitement des gaz de combustion et pour l'actionnement en rotation d'un arbre d'entraînement (50).

7. Appareil (1) selon la revendication 6, qui comprend de plus des moyens pour générer de l'énergie électrique, qui sont associés audit moteur (49).

8. Appareil (1) selon la revendication 6 ou 7, dans lequel ledit moteur (49) est une turbine.

9. Appareil (1) selon l'une ou plusieurs des revendications précédentes, dans lequel lesdits deuxièmes moyens de délivrance (12) comprennent une machine opérationnelle rotative (52) entraînée par ledit arbre d'entraînement (50) pour la conversion au moins partielle de l'énergie mécanique dudit arbre en énergie de pression potentielle du deuxième milieu oxydant (C2).

10. Appareil (1) selon la revendication 9, dans lequel ladite machine opérationnelle (52) est un compresseur.

11. Appareil (1) selon l'une ou plusieurs des revendications précédentes, dans lequel lesdits premiers moyens de délivrance (11) comprennent une machine opérationnelle séparée (54) dans laquelle la délivrance est reliée à ladite première chambre d'entrée (9).

12. Appareil (1) selon l'une ou plusieurs des revendications précédentes, qui comprend de plus des moyens (29) pour retirer des résidus solides du bas de ladite chambre de réaction (4).

13. Appareil (1) selon la revendication 12, dans lequel lesdits moyens de retrait (29) comprennent un arbre rotatif (30) qui fait saillie partiellement dans ladite chambre de réaction (4) et qui supporte des éléments (31) pour rompre les résidus solides déposés sur le fond de ladite chambre de réaction (4) et un dispositif de déplacement à vis (32) pour éloigner lesdits résidus de ladite chambre de réaction (4).
